# EUROPÄISCHE PATENTSCHRIFT

(11) **EP 3 826 279 B1**
(45) Veröffentlichungstag und Bekanntmachung des Hinweises auf die Patenterteilung: **16.11.2022**
(21) Anmeldenummer: 19211017.9
(22) Anmeldetag: 22.11.2019
(51) Int. Cl.: H04M 1/04, H02J 7/00, G06F 1/16

(54) **WANDEINSATZ ZUR AUFNAHME VON BEDIENELEMENTEN UND MOBILGERÄTEN**
WALL INSERT FOR HOLDING OPERATING ELEMENTS AND MOBILE DEVICES
INSERT MURAL POUR LE MAINTIEN D'ÉLÉMENTS DE COMMANDE ET D'APPAREILS MOBILES

(43) Veröffentlichungstag der Anmeldung: 26.05.2021
(73) Patentinhaber: ise Individuelle Software und Elektronik GmbH, 26122 Oldenburg (DE)
(72) Erfinder: Jahnke, Timo, 26135 Oldenburg (DE); Klein, Torben, 27798 Hude (DE); Sahm, Christoph, 26131 Oldenburg (DE)
(74) Vertreter: Angerhausen, Christoph

(56) Entgegenhaltungen:
- US-A1- 2007 035 917
- US-A1- 2012 005 495
- US-A1- 2012 139 484
- US-A1- 2019 027 953

## Beschreibung

Die vorliegende Patentanmeldung bezieht sich auf einen Einsatz zum ortsfesten Einbau in eine Wand, etwa mittels einer Schalterdose. Der Einsatz ist eingerichtet, ein mobiles Bedienelement aufzunehmen. Der Einsatz kann statt eines mobilen Bedienelements auch ein alternatives Gerät aufnehmen, beispielsweise ein Smartphone, und dieses aufladen.

### HINTERGRUND

Einsätze in Wände sind in der Innenausstattung von Gebäuden verbreitet und werden in Verbindung mit einer Schalterdose, in die sie eingesetzt werden können, auch als Unterputzeinsätze bezeichnet. Sie werden in eine Schalterdose in eine Öffnung in der Wand eingelassen und sind beispielsweise als Steckdose, Lichtschalter, Netzwerk- oder Fernsehanschluss und dergleichen ausgebildet.

US 2012/0005495 A1 offenbart eine Dockingstation mit einem "Outlet plug" zum Anschließen der Dockingstation an eine Steckdose. Eine Aufnahmefläche dient der Aufnahme eines Mobilgeräts. Ferner ist ein "Port" offenbart, der der Verbindung mit einem externen Gerät dient.

US 2019/0027953 A1 offenbart eine tragbare Einrichtung zur Aufnahme mobiler Geräte. Die Einrichtung ist zur Befestigung an einer Wand vorgesehen.

### ZUSAMMENFASSUNG

Der hier offenbarten Erfindung liegt die Aufgabe zugrunde, einen Einsatz bereitzustellen, der alternative Geräte aufnehmen kann. Diese Aufgabe wird durch Anspruch 1 gelöst.

Ausführungsformen der Erfindung umfassen einen Einsatz zum ortsfesten Einbau in eine Wand, umfassend: Einen Sockel, der eingerichtet ist, an eine Stromversorgung in oder an der Wand angeschlossen zu werden; ein mobiles Bedienelement; ein auf dem Sockel aufgesetztes Kontaktelement, das eingerichtet ist, das mobiles Bedienelement oder ein Mobilgerät aufzunehmen; und eine Ladestation in dem Sockel, die eingerichtet ist, mit der Stromversorgung verbunden zu werden und bei Aufnehmen eines mobilen Bedienelements oder Mobilgeräts durch das Kontaktelement einen Akkumulator in dem Bedienelement bzw. Mobilgerät mit Strom zu versorgen.

Insbesondere kann der Einsatz einen Magneten zum Aufnehmen und Anhaften des Bedienelements und/oder des Mobilgeräts an dem Kontaktelement umfassen.

Vorteilhafterweise umfasst der Einsatz eine Schnittstelle, die eingerichtet ist, einen elektrischen Kontakt oder eine Funkverbindung zwischen einem externen Netzwerkbussystem und dem Kontaktelement herzustellen.

Die Schnittstelle kann ferner eingerichtet sein, ein Signal von einem an dem Kontaktelement aufgenommenen Bedienelement zu empfangen und basierend auf diesem Signal einen Steuerbefehl an das Netzwerkbussystem zu senden.

In weiteren Ausführungsformen umfasst der Einsatz ferner einen Funkempfänger, der eingerichtet ist, ein Signal von einem oder mehreren Bedienelementen zu empfangen und dieses an das Netzwerkbussystem zu senden; und/oder einen Funksender, der eingerichtet ist, ein Signal aus dem Netzwerkbussystem an ein oder mehrere Bedienelemente weiterzuleiten.

Darüber hinaus kann das Kontaktelement eine Aussparung aufweisen, in die das Bedienelement eingesetzt werden kann.

Vorteilhafterweise umfasst der Einsatz ferner einen Bügel, der aus dem Einsatz ausgeklappt werden kann und in ausgeklappter Position das Bedienelement oder das Mobilgerät vor dem Herunterfallen sichert.

Insbesondere umschließt der Bügel in eingeklappter Position das Kontaktelement an drei Seiten und schließt bündig mit einer Stirnseite des Kontaktelements ab.

Dabei kann der Bügel in das Kontaktelement eingelassen sein und bündig mit einer Stirnseite des Kontaktelements abschließen.

Vorteilhafterweise weist der Bügel eine Lasche auf, an der er in die ausgeklappte Position gezogen werden kann.

In weiteren Ausführungsformen umfasst der Einsatz ferner ein Sicherungsband, das abrollbar an einer Spule an dem Kontaktelement befestigt ist, wobei das Sicherungsband im abgerollten Zustand um das Bedienelement oder das Mobilgerät gezogen werden kann, um dieses an das Kontaktelement zu drücken.

Vorteilhafterweise umfasst der Einsatz ferner eine in das Kontaktelement eingelassene Lasche, die aus diesem herausgezogen werden kann und in herausgezogener Position starr von dem Kontaktelement absteht und eingerichtet ist, ein Mobilgerät oder Bedienelement vor dem Herunterfallen zu sichern.

Der Einsatz kann einen Rahmen umfassen, der an dem Kontaktelement befestigt und von diesem beanstandet ist, wobei zwischen Rahmen und Kontaktelement ein Mobilgerät eingeschoben werden kann, und wobei der Rahmen eine Aussparung zum Einsetzen eines Bediengeräts aufweist.

Das Bedienelement umfasst ein oder mehrere Tastelemente. Tastelemente können z.B. mechanisch oder kapazitiv ausgeführt werden.

Das Mobilgerät ist beispielsweise ein Mobiltelefon, ein Notebook, eine Fernbedienung oder ein Tablet.

### KURZE BESCHREIBUNG DER ZEICHNUNGEN

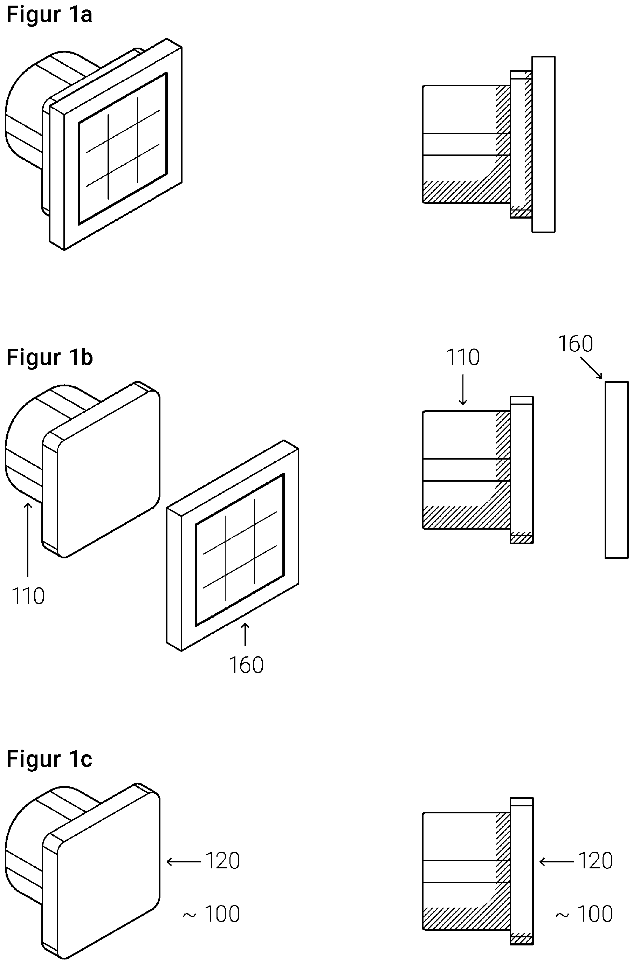

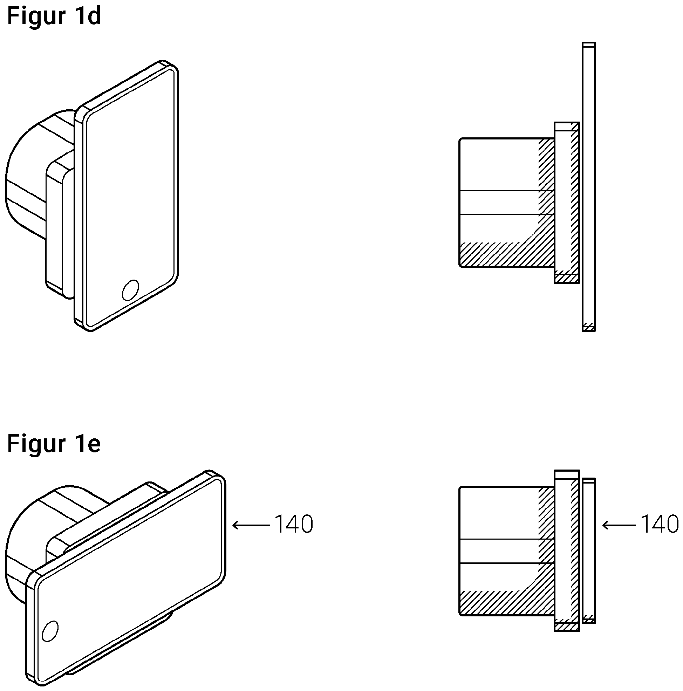

Figuren 1A bis 1E, 2A bis 2E, 3A bis 3E, 4A bis 4D, 5A bis 5E, 6A bis 6E, 7A bis 7D und 8A bis 8E zeigen erfindungsgemäße Ausführungsformen in perspektivischen Ansichten und Seitenansichten.

### AUSFÜHRLICHE BESCHREIBUNG

Bei der Vernetzung von Gebäuden werden Bedienelemente verwendet, beispielsweise Schalter zum Bedienen von Leuchten, Jalousien, Heizung und dergleichen. Im Stand der Technik werden solche Bedienelemente in einen Einsatz integriert und mittels Schalterdose fest in die Wand eingebaut und über Kabelanschlüsse mit der Hauselektrik verbunden.

Der erfindungsgemäße Einsatz ermöglicht die Verwendung eines mobilen Bedienelements. Hierzu stellt der Einsatz einen Sockel bereit, der beispielsweise in eine Schalterdose eingesetzt werden kann und über den ein Kontakt mit der Hauselektrik hergestellt wird. Beispielsweise umfasst der Sockel Kabelanschlüsse oder zumindest Durchlässe für derartige Anschlüsse.

Der Einsatz umfasst ferner ein Kontaktelement. Dieses ist beispielsweise auf den Sockel aufgesetzt und bildet raumseitig eine Schnittstelle, die eingerichtet ist, ein mobiles Bedienelement aufzunehmen. Das Kontaktelement kann beispielsweise eine mechanische Steckverbindung umfassen, die das Bedienelement in Position hält. Alternativ kann in oder unter dem Kontaktelement ein Magnet angeordnet sein; durch den Magneten haftet das Bedienelement an einer Oberseite des Kontaktelements und damit an dem Einsatz.

Das Kontaktelement kann sowohl zur Aufnahme des Bedienelements als auch zur Aufnahme eines Mobilgeräts, beispielsweise eines Smartphones, eingerichtet sein. Das Mobilgerät kann mittels eines unter einer Oberseite des Kontaktelements angeordneten Magneten an dem Kontaktelement und damit an dem Einsatz haften. Alternativ kann das Kontaktelement an einer Seite eine ausziehbare Lasche aufweisen, auf der das Mobilgerät abgestellt werden kann; beispielsweise kann das Mobilgerät auf der Lasche stehen und an einer zweiten Seite des Kontaktelements lehnen.

Das Kontaktelement kann an einer in den Raum gerichteten Oberseite einen umlaufenden Rahmen aufweisen, dessen Innenmaße mit den Außenmassen des Bedienelements übereinstimmen, und in den das Bedienelement eingesetzt werden kann. Ein solcher Rahmen kann gegenüber der übrigen Oberseite des Kontaktelements eine Höhe aufweisen, die identisch mit einer Höhe des Bedienelements ist, so dass dieses bündig mit dem Rahmen abschließt, wenn es in diesen eingesetzt ist. Jedoch kann die Höhe des Rahmens auch geringer sein als die Höhe des Bedienelements, beispielsweise um einem Benutzer das Ablösen des Bedienelements aus dem Rahmen zu ermöglichen. In Ausführungsformen mit Rahmen kann der Einsatz so in eine Wand eingesetzt werden, dass eine raumseitige Oberfläche des Kontaktelements bündig mit der Wandoberfläche abschließt und lediglich der Rahmen aus der Wandoberfläche ragt. Alternativ umrahmt der Rahmen nicht das Bedienelement, sondern das Kontaktelement. In solchen Ausführungsformen bilden Rahmen und Kontaktelement eine bündige Oberfläche und ragen gemeinsam aus der Wandoberfläche.

Zwischen Rahmen und Kontaktelement kann ein Abstand vorgesehen sein, der ebenso hoch ist wie ein Mobilgerät, so dass dieses hinter den Rahmen geschoben und zwischen Rahmen und Kontaktelement festgehalten werden kann. Eine andere Alternative ist ein Bügel, der aus dem Kontaktelement oder dem Rahmen herausklappbar ist und auf dem das Mobilgerät abgelegt werden kann. Eine weitere Alternative ist ein Rollo oder Sicherungsband, das auf einer seitlich an dem Kontaktelement oder dem Rahmen angebrachten Welle oder Spule aufgerollt ist, und das herausgezogen und an einer gegenüberliegenden Seite des Kontaktelements arretiert werden kann, um das Mobilgerät zwischen dem ausgezogenen Rollo und dem Kontaktelement zu halten.

In bestimmten Ausführungsformen enthält der Einsatz außerdem einen Anschluss, über den das Kontaktelement an ein externes drahtloses oder drahtgebundenes Netzwerkbussystem angeschlossen werden kann. Verfügt die Hauselektrik über einen drahtgebundenen Netzwerkbus, kann der Einsatz somit an diesen angeschlossen werden. Der Anschluss kann ferner einen Funkempfänger enthalten, über den ein Bedienelement mit einem Netzwerkbus in Kontakt treten und Befehle übermitteln kann. Dies eignet sich beispielsweise für die Übersendung von Steuerbefehlen an den Netzwerkbus. Liegt der Netzwerkbus als drahtloses Netzwerk vor, kann der Anschluss mittels Funk Signale von einem Bedienelement empfangen und diese an den drahtlosen Netzwerkbus senden. Zusätzlich oder alternativ kann ein Funksender vorgesehen sein, der Signale von dem Bedienelement empfängt und diese an den Netzwerkbus weitergibt.

Die Möglichkeit, jeweils ein Mobilgerät und ein Bedienelement aufzunehmen, wird durch verschiedene Ausführungsformen erzielt.

In einer ersten Ausführungsform weist das Kontaktelement eine glatte Oberfläche auf, die beim Einbau in eine Wand in den Raum gerichtet ist und unter der ein Magnet angeordnet ist; dieser Magnet ist in der Lage, entweder das Mobilgerät oder das Bedienelement zu halten.

In einer zweiten Ausführungsform weist das Kontaktelement ebenfalls eine glatte Oberfläche mit darunter befindlichem Magneten sowie seitlich eine Lasche auf; der Magnet dient dem Anhaften des Bedienelements, während die Lasche verwendet werden kann, um das Mobilgerät abzulegen, so dass dieses an dem Kontaktelement lehnt. Die Lasche kann in das Kontaktelement durch Einschieben versenkt werden, um das Anhaften des Bedienelements zu ermöglichen, und kann herausgezogen werden, um das Abstellen des Mobilgeräts zu ermöglichen. Die Lasche kann auch so angeordnet sein und soweit ausziehbar sein, dass selbst beim Anhaften eines Bedienelements an dem Kontaktelement noch ein Mobilgerät auf der Lasche abgestellt werden kann.

In einer dritten Ausführungsform ist raumseitig vor dem Kontaktelement ein Rahmen angebracht; zwischen Rahmen und Einsatz beziehungsweise zwischen Rahmen und Kontaktelement kann das Mobilgerät eingeschoben werden. Vorzugsweise ist der Abstand des Rahmens von dem Einsatz so bemessen, dass das Mobilgerät exakt eingeschoben werden kann. Gleichzeitig ist die Rahmenöffnung so bemessen, dass das Bedienelement in diese eingesetzt werden kann. In dieser Ausführungsform besteht ebenfalls die Möglichkeit, Mobilgerät und Bedienelement gleichzeitig mit dem Einsatz zu koppeln. Jedoch ist darüber hinaus vorgesehen, den Rahmen direkt und ohne Abstand auf den Einsatz zu schieben, falls dort kein Mobilgerät eingeschoben ist. Beispielsweise kann der Rahmen über einen in das Kontaktelement versenkbaren Steg mit dem Kontaktelement verbunden sein. Der Steg ist durch Ausübung von Druck auf den Rahmen in das Kontaktelement versenkbar, so dass der Rahmen oder durch einen Federmechanismus an das Kontaktelement angedrückt werden kann, und ist herausziehbar, so dass der Rahmen wieder in die beabstandete Position gebracht werden kann.

In einer vierten Ausführungsform verfügt das Kontaktelement über einen herausklappbaren Bügel. Ist der Bügel herausgeklappt, kann auf ihm das Mobilgerät abgelegt werden. Ist der Bügel eingeklappt, kann auf der Oberfläche der zweiten Schnittstelle mittels Magnetkraft das Bedienelement angelegt werden.

In einer fünften Ausführungsform ist das Kontaktelement von einen Rahmen umschlossen, der mit dem Kontaktelement raumseitig eine bündige Oberfläche bildet. Das Bedienelement kann auf den Rahmen und das Kontaktelement aufgesetzt werden. Der Rahmen kann, wenn der Einsatz in eine Wand eingelassen ist, aus der Wandoberfläche ragen, während alle weiteren Bestandteile des Einsatzes, insbesondere ein nicht umrahmter Teil des Kontaktelements, unterhalb der Wandoberfläche liegt.

In einer sechsten Ausführungsform weist das Kontaktelement ebenfalls eine Oberfläche mit einem umlaufenden Rahmen auf, auf den das Bedienelement aufngesetzt werden kann. Gleichzeitig verfügt der Rahmen über eine herausziehbare Lasche, auf der das Mobilgerät abgestellt werden kann. Die Lasche ist in den Rahmen versenkbar. In dieser Ausführungsform kann der Einsatz mit oder ohne Magnet ausgebildet sein.

In einer siebten Ausführungsform ist der bereits beschriebene Rahmen seitlich mit einer Welle oder Spule versehen, auf der ein Rollo oder Sicherungsband aufgewickelt ist. Das Sicherungsband kann herausgezogen werden, und kann auf einer gegenüberliegenden Seite des Rahmens befestigt werden, um ein Mobilgerät unter Zugspannung an die raumseitige Oberfläche des Kontaktelements und des Rahmens zu drücken. Ist das Sicherungsband in aufgerolltem Zustand, kann das Bedienelement angebracht werden, beispielsweise mittels Magnetkraft.

In einer achten Ausführungsform ist, analog zur oben beschriebenen vierten Ausführungsform, der Rahmen mit einem herausklappbaren Bügel versehen, auf dem in ausgeklapptem Zustand das Mobilgerät abgestellt werden kann. Jedoch ist der Bügel in dieser Ausführungsform im eingeklappten Zustand in die Oberfläche des Rahmens und des Kontaktelements eingelassen, so dass das Bedienelement bündig auf dieser Oberfläche haften und mittels Magnet in Position gehalten werden kann. Um den Bügel auszuklappen, ist dieser mit einer Lasche versehen, die im eingeklappten Zustand aus der Oberfläche herausragt; die Lasche ist seitlich in der Oberfläche angeordnet, so dass das Bedienelement neben der Lasche vollständig an der Oberfläche haften kann.

Das Bedienelement kann vielfältige Funktionen aufweisen. Auf dem Bedienelement ist ein Bedienfeld vorgesehen, das mehrere Tastelemente enthält. Mit derartigen Tastelementen können in einer Ausführungsform beispielsweise drahtlose Geräte gesteuert werden, etwa drahtlose Lautsprecher, drahtlose Jalousien oder drahtlose Leuchten. In solchen Ausführungsformen umfasst das Bedienelement Einrichtungen zur drahtlosen Kommunikation, beispielsweise einen Funkadapter für ein Gebäudebusprotokoll (bspw. KNX-RF), WLAN- oder Bluetooth-Kommunikation. Insbesondere kann der oben beschriebene Anschluss zum Empfangen von Signalen dienen und an ein drahtgebundenes oder drahtloses Netzwerkbussystem entsprechende Befehle senden. Durch die Kombination von Funkadapter und Anschluss ist dies unabhängig davon möglich, ob das Bedienelement in unmittelbarem physischen Kontakt mit dem Kontaktelement steht.

In allen hier beschriebenen Ausführungsformen kann unter der Oberfläche des Kontaktelements eine Ladestation angeordnet sein, die bei Kontakt mit dem Mobilgerät oder dem Bedienelement in der Lage ist, einen Akkumulator oder sonstige Batterie des Mobilgeräts beziehungsweise des Bedienelements aufzuladen. Die Ladestation ist über den beschriebenen Anschluss mit einer Stromversorgung der Hauselektrik verbunden. Der Ladevorgang kann auch ohne unmittelbaren Kontakt zwischen Ladestation und Mobilgerät oder Bedienelement erfolgen, beispielsweise mittels induktiver Energieübertragung, beispielsweise nach dem Qi-Standard.

Figuren 1A bis 1E zeigen jeweils links eine perspektivische Ansicht und rechts eine Seitenansicht eines Einsatzes 100 mit einem Sockel 110 und darauf aufgesetztem Kontaktelement 120. Der erwähnte Anschluss befindet sich innerhalb des Einsatzes 100 und ist nicht gezeigt. Das Kontaktelement 120 weist eine glatte Oberfläche auf, die bei Montage des Einsatzes in einer Wand in den Raum zeigt. An dem Kontaktelement kann entweder ein Bedienelement 160 oder ein Mobilgerät 140 angebracht werden. Bedienelement 160 und Mobilgerät 140 haften an dem Kontaktelement mittels eines unter der Oberfläche des Kontaktelements 120 angeordneten Magneten (nicht gezeigt). In dem Einsatz oder in dem Kontaktelement kann ferner eine Ladestation angeordnet sein, die das Mobilgerät 140 und/oder das Bedienelement 160 mit Strom versorgt. Die Ladestation ist über den Anschluss, beispielsweise mittels Kabelanschlüssen, mit der Stromversorgung des Gebäudes verbunden. Das Bedienelement kann, unabhängig davon, ob es mit dem Einsatz gekoppelt ist oder nicht, verwendet werden, um drahtlos bestimmte Einrichtungen (nicht gezeigt), beispielsweise ein Radio oder einen Lautsprecher, zu steuern. Hierzu kann das Bedienelement einen Funkadapter enthalten. Jedoch kann das Bedienelement 160 bei Kontakt mit dem Kontaktelement 120 beispielsweise über entsprechende Kontakte in dem Kontaktelement 120 und dem Bedienelement direkt mit der Hauselektrik in Verbindung treten. In einer solchen Konfiguration kann das Bedienelement 160 verwendet werden, um drahtlos oder drahtgebunden bestimmte elektrische Einrichtungen im Gebäude zu steuern, etwa einen Lichtschalter oder einen Motor, der eine Jalousie antreibt. Das Bedienelement 160 kann einen umlaufenden Rahmen aufweisen, in diesem Fall ist der Einsatz 100 vorzugsweise bis zur raumseitigen Oberfläche des Kontaktelements 120 in die Wand versenkt, so dass lediglich der Rahmen und das Bedienelement 160 aus der Wandoberfläche in den Raum ragen.

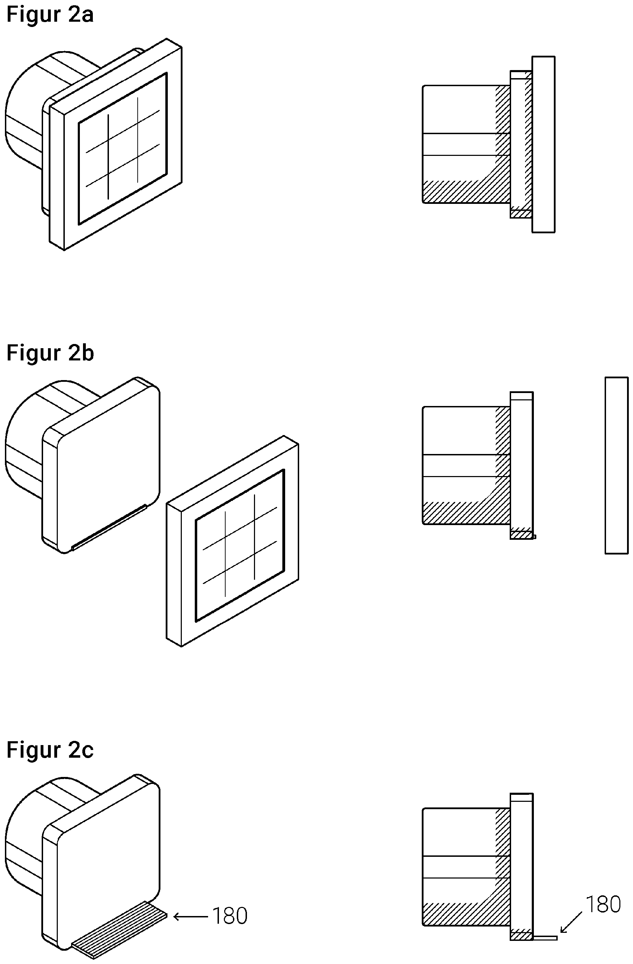

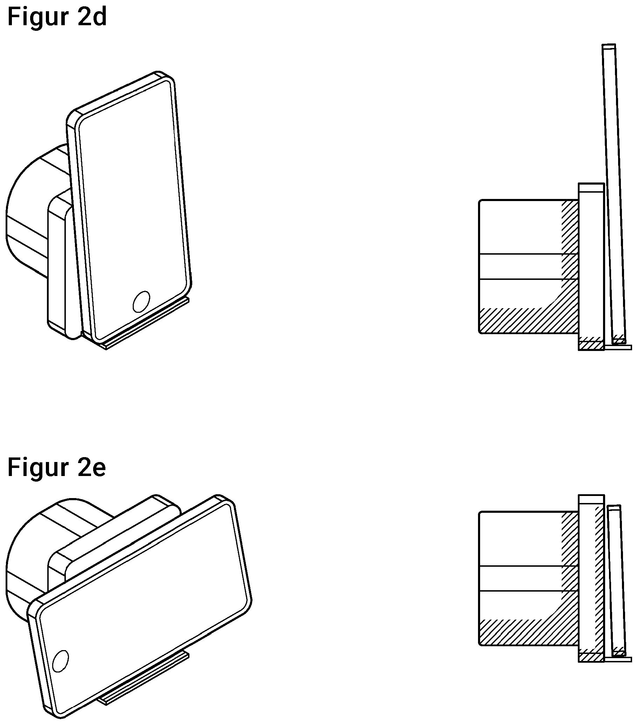

Figuren 2A bis 2E zeigen ebenfalls perspektivische und Seitenansichten eines Einsatzes 100 mit Sockel 110 und Kontaktelement 120. Der Einsatz 100 ist eingerichtet, ein Mobilgerät 140 beziehungsweise ein Bedienelement 160 aufzunehmen. Das Kontaktelement 120 enthält eine Lasche 180, die herausgezogen werden kann. Die Lasche 180 ist im ausgezogenen Zustand starr, so dass das Mobilgerät 140 darauf abgestellt werden kann und dann lose an einer gegenüberliegenden Seite des Kontaktelements 120 angelehnt wird. Das Bedienelement 160 haftet an dem Kontaktelement 120 mittels Magnet (nicht gezeigt). Hinsichtlich der Funktionalität von Bedienelement und Mobilgerät, insbesondere der Möglichkeit, drahtlos oder drahtgebunden zu kommunizieren, wird auf die obigen Erläuterungen verwiesen.

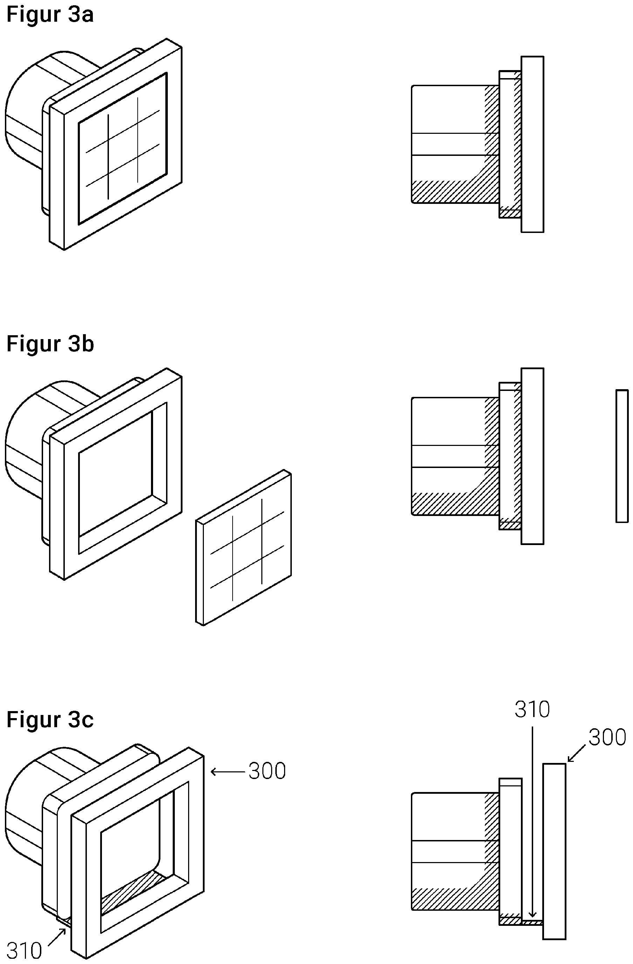

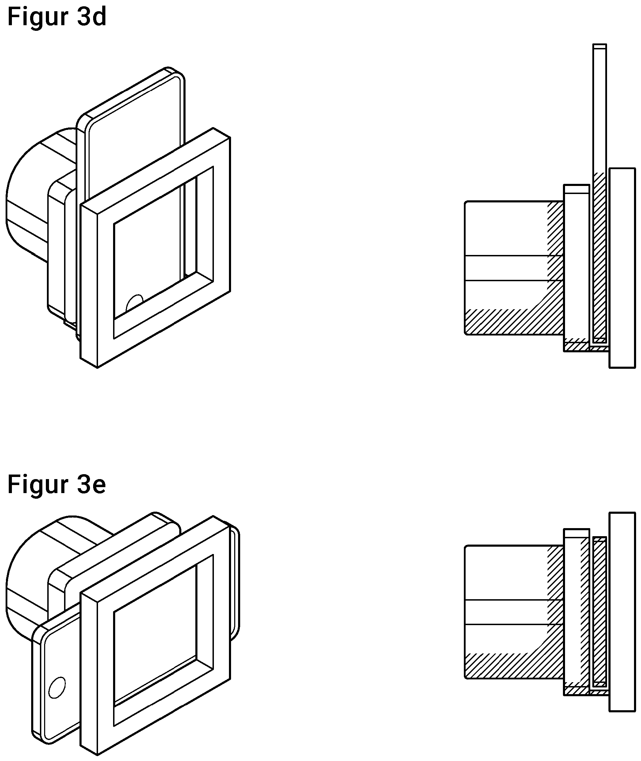

Figuren 3A bis 3E zeigen Einsatz 100, Sockel 110, Kontaktelement 120, Mobilgerät 140 und Bedienelement 160. Das Kontaktelement 120 ist von einem Rahmen 300 umschlossen, der in einer ersten Position (Figur 3C bis 3E) von dem Kontaktelement beabstandet ist. Der Abstand ist so bemessen, dass das Mobilgerät 140 zwischen dem Rahmen 300 und der übrigen Struktur des Kontaktelements 120 eingeschoben werden kann. Der Rahmen 300 kann mit dem Kontaktelement 120 über einen ausziehbaren Steg 310 verbunden sein. Der Steg 310 ist über einen in dem Kontaktelement 120 eingelassenen Federmechanismus befestigt und klemmt ein zwischen dem Kontaktelement 120 und Rahmen 300 eingesetztes Mobilgerät ein. Wenn zwischen Rahmen 300 und Kontaktelement 120 kein Mobilgerät steckt, kann der Rahmen mitsamt dem Steg unmittelbar an das Kontaktelement 120 herangeschoben werden oder wird durch den Federmechanismus eingezogen. Unabhängig davon, ob hinter dem Rahmen ein Mobilgerät steckt und ob der Rahmen unmittelbar an das Kontaktelement 120 grenzt, kann in die Rahmenöffnung ein Bedienelement 160 eingesetzt werden. Eine drahtgebundene Kommunikation zwischen Mobilgerät und Hauselektrik und/oder zwischen Bedienelement und Hauselektrik kann über in den Steg 310 eingelassene Leitungen implementiert sein.

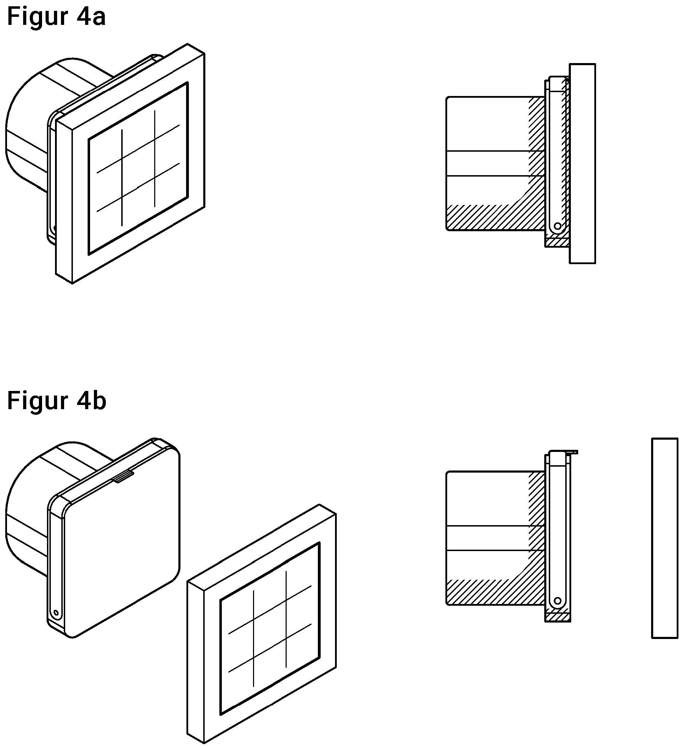

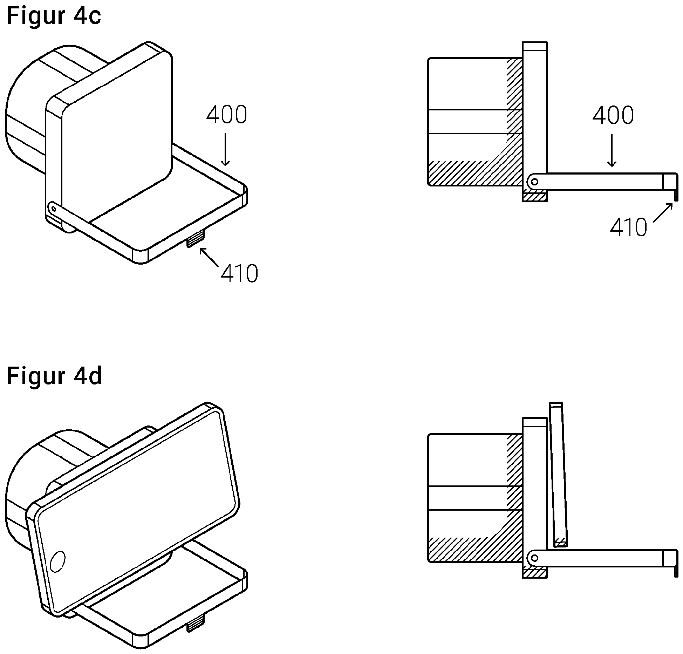

Figuren 4A bis 4D zeigen neben Einsatz 100, Sockel 110, Kontaktelement 120, Mobilgerät 140 und Bedienelement 160 einen Bügel 400, der eine Lasche 410 aufweist. Der Bügel 400 ist Bestandteil des Kontaktelements 120 und liegt im eingeklappten Zustand an drei Seiten des Kontaktelements 120 an, wobei lediglich die Lasche 410 aus der Oberfläche des Kontaktelements 120 herausragt; an dieser Lasche 410 kann der Bügel 400 aus dem Kontaktelement herausgezogen werden. Der Bügel 400 ist beispielsweise an zwei Punkten an gegenüberliegenden Seiten des Kontaktelements 120 drehbar befestigt. Ist der Bügel 400 ausgeklappt, bildet er mit der Oberfläche des Kontaktelements 120 einen rechten Winkel. Das Mobilgerät 140 kann auf dem ausgeklappten Bügel 400 abgelegt werden und wird sowohl durch den Bügel 400 als auch durch einen Magneten in dem Kontaktelement 120 gehalten. Diese Ausführungsform eignet sich besonders, um auch Mobilgeräte aufzunehmen, die von den üblichen Abmessungen eines Smartphones abweichen, beispielsweise einen Akkuschrauber, einen Fön oder einen Rasierapparat. In eingeklapptem Zustand kann das Bedienelement 160, ohne den Bügel 400 zu berühren, per Magnetkraft an dem Kontaktelement 120 befestigt werden. Die Lasche 410 ist seitlich an dem Kontaktelement 120 angeordnet, so dass die Lage des Bedienelements 160 nicht beeinträchtigt wird; vielmehr kann das Bedienelement 120 durch den Benutzer an der Lasche 410 ausgerichtet werden, so dass es waagerecht angeordnet werden kann.

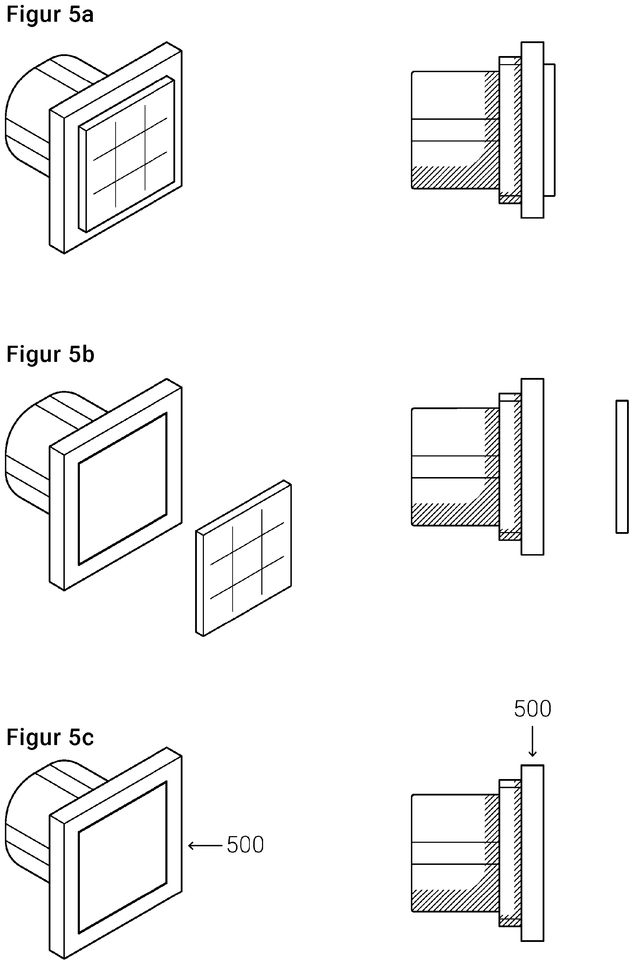

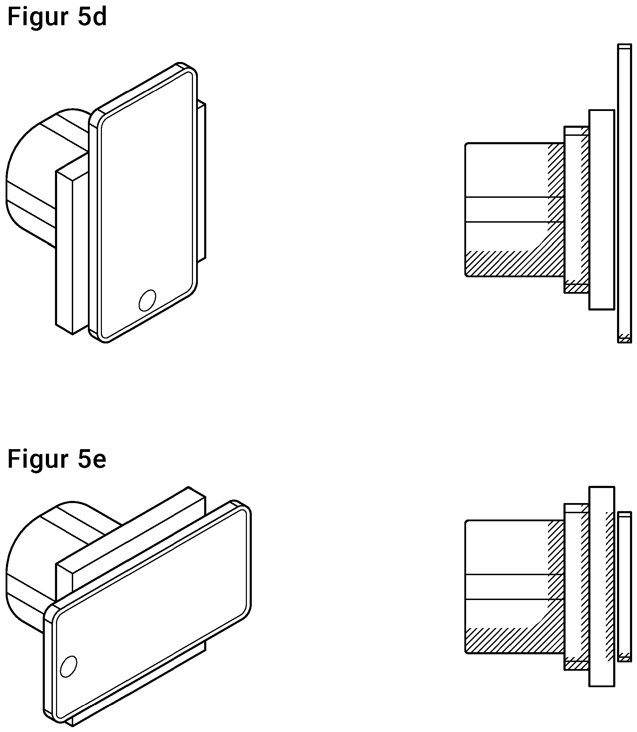

Figuren 5A bis 5E zeigen Einsatz 100, Sockel 110, Kontaktelement 120, Mobilgerät 140 und Bedienelement 160. In dieser Ausführungsform weist das Kontaktelement 120 einen umlaufenden Rahmen 500 auf, der mit dem Kontaktelement 120 raumseitig bündig abschließt. Auf diesen Rahmen kann, wie in Figuren 5A und 5B gezeigt ist, das Bedienelement 160 aufgesetzt werden. Figur 5C zeigt den Einsatz ohne Bedienelement. Figuren 5D und 5E zeigen, dass anstelle des Bedienelements ein Mobilgerät auf dem Einsatz haftet.

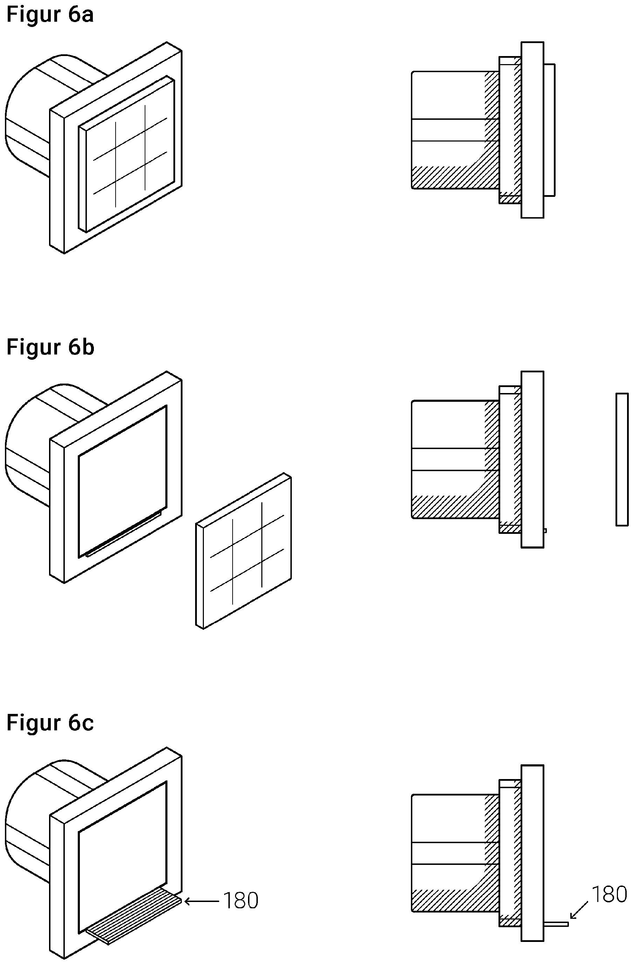

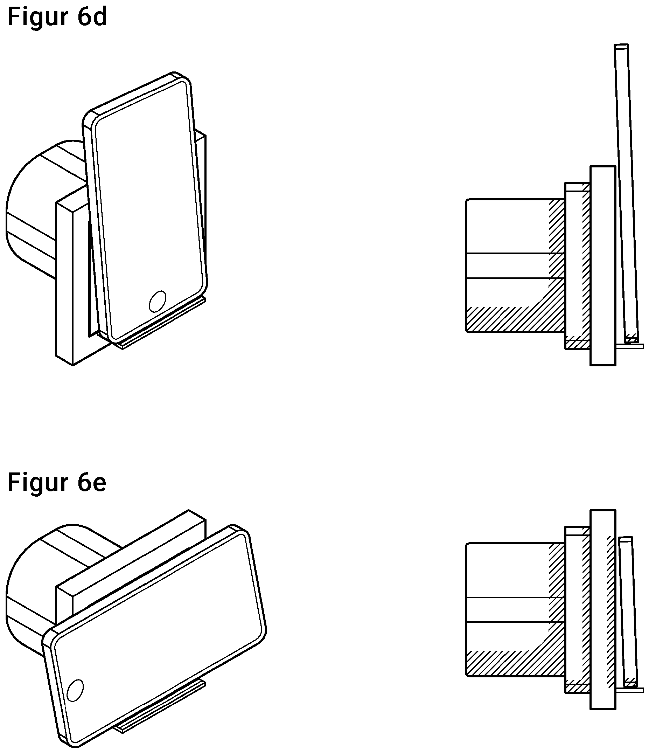

Figuren 6A bis 6E zeigen eine Kombination des in Figuren 5A bis 5E gezeigten Rahmens 500 mit der in Figuren 2A bis 2E gezeigten Lasche 180.

Wie in den Figuren 5A bis 5E ist der Rahmen fest mit dem Kontaktelement 120 verbunden und enthält eine ausziehbare Lasche 180, die das Bedienelement 160 in aufrechter Lage hält.

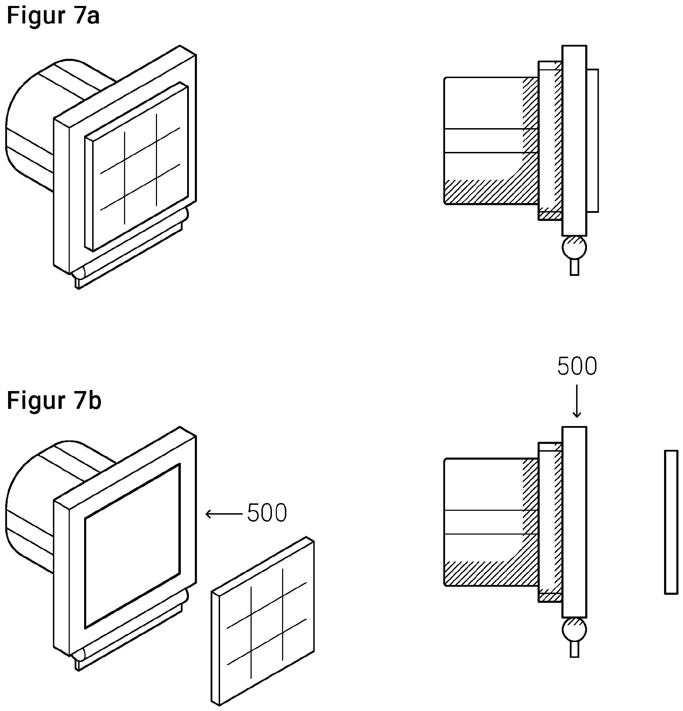

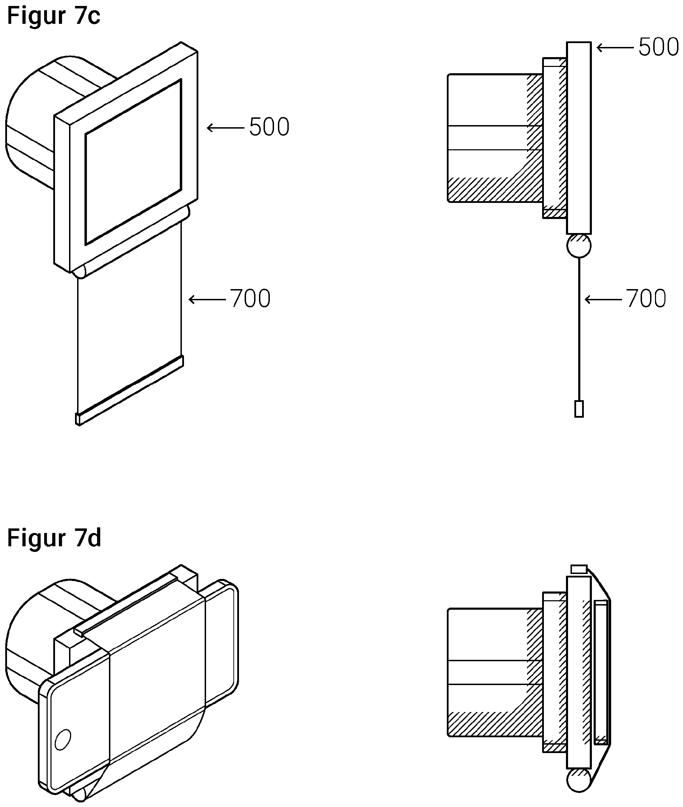

Figuren 7A bis 7D zeigen Einsatz 100, Sockel 110, Kontaktelement 120, Mobilgerät 140 und Bedienelement 160. Wie in der Ausführungsform der Figuren 5A bis 5E ist das Kontaktelement von einem Rahmen 500 umschlossen. Das Bedienelement 160 kann auf das Kontaktelement 120 aufgesetzt werden. Der Rahmen 500 ist seitlich mit einem Rollo oder Sicherungsband 700 versehen, das auf einer Welle oder Spule aufgewickelt ist und über einen Griff von der Welle abgerollt werden kann. Das Rollo kann über die Raumseite des Rahmens 500 gespannt werden und auf der Seite, die der Welle gegenüberliegt, an dem Kontaktelement 120 befestigt werden, beispielsweise durch einen weiteren Magneten in dem Kontaktelement 120 oder einen Klettverschluss. Mit dem Rollo kann also per Zugspannung ein Mobilgerät 140 an das Kontaktelement 120 gedrückt werden.

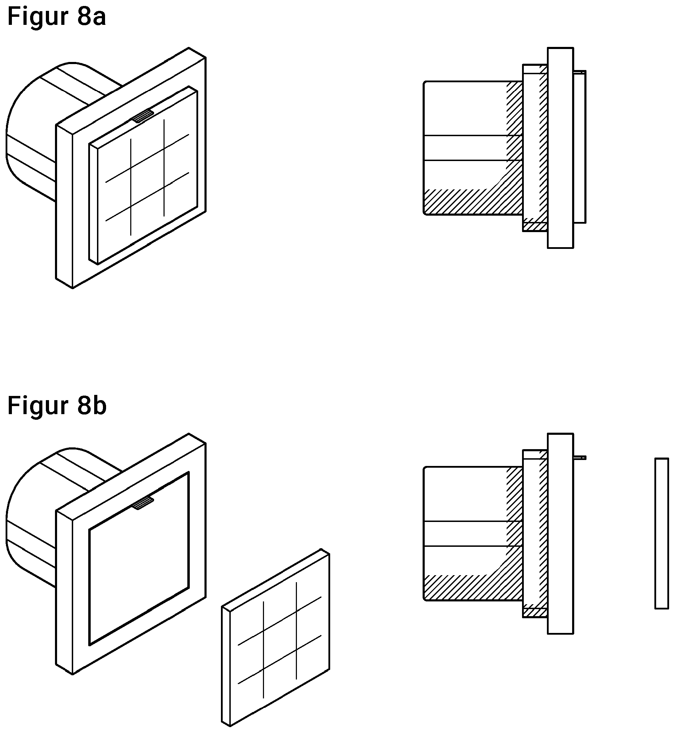

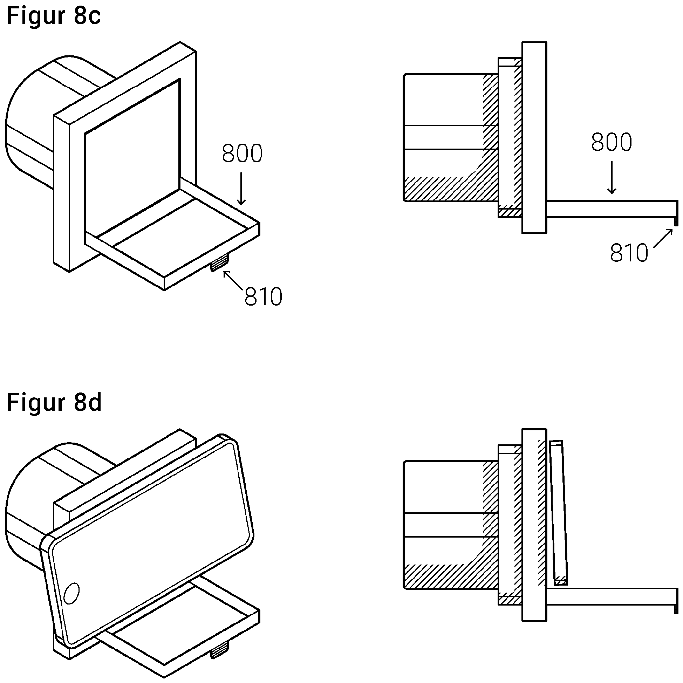

Figuren 8A bis 8E zeigen, ebenfalls wie Figuren 5A bis 5E, Einsatz 100, Sockel 110, Kontaktelement 120, Mobilgerät 140, Bedienelement 160 und Rahmen 500. Zwischen Rahmen und Kontaktelement ist ein Bügel 800 eingelassen, der mittels einer Lasche 810 aus der Ebene des Rahmens beziehungsweise des Kontaktelements 120 herausklappbar ist. Im eingeklappten Zustand folgt die Form des Bügels 800 der Form des Rahmens, den die Erhebung bildet. Somit kann das Bedienelement 160 sowohl im ausgeklappten als auch im eingeklappten Zustand des Bügels 800 auf das Kontaktelement 120 aufgesetzt werden. Im ausgeklappten Zustand steht der Bügel 800 annähernd senkrecht von dem Kontaktelement und damit senkrecht von der Wand ab, so dass auf dem Bügel das Mobilgerät 140 abgelegt werden kann. Wie in den zuvor erläuterten Ausführungsformen kann der Sockel 110 oder das Kontaktelement 120 eine Ladestation enthalten, die das Mobilgerät, je nach Ausführungsform auch das Bedienelement 160, erkennt und auflädt.

Die Erfindung ermöglicht die gleichzeitige Verwendung eines Einsatzes als Aufnahme für mobile Bedienelemente, wie etwa eine Fernbedienung oder ein programmierbares Tastenfeld, und für Mobilgeräte, wie etwa ein Smartphone, einen Rasierapparat oder ähnliches. Der Einsatz verfügt über ein Kontaktelement, das beide Arten von Geräten aufnehmen kann, in manchen Ausführungsformen sogar gleichzeitig. In weiteren Ausführungsformen ermöglicht die Erfindung durch Anbindung an ein Hausnetz und Bereitstellen einer integrierten Ladestation ein Aufladen der abgelegten oder eingesetzten Geräte. Ferner wird Kommunikation mit einem Netzwerkbus ermöglicht, der wahlweise drahtlos oder drahtgebunden sein kann.

## Patentansprüche

1. Einsatz (100) zum ortsfesten Einbau in eine Wand, umfassend:
Einen Sockel (110), der eingerichtet ist, an eine Stromversorgung in oder an der Wand angeschlossen zu werden;
Ein mobiles Bedienelement (160);
ein auf dem Sockel (110) aufgesetztes Kontaktelement (120), das eingerichtet ist, das mobile Bedienelement (160) oder ein Mobilgerät (140) aufzunehmen;
eine Ladestation in dem Sockel (110), die eingerichtet ist, mit der Stromversorgung verbunden zu werden und bei Aufnehmen eines mobilen Bedienelements (160) oder eines Mobilgeräts (1140) durch das Kontaktelement (120) einen Akkumulator in dem mobilen Bedienelement (160) beziehungsweise dem Mobilgerät (140) mit Strom zu versorgen;
**dadurch gekennzeichnet, dass** das Bedienelement (160) ein oder mehrere Tastelemente aufweist, insbesondere wobei die Tastelemente mechanisch oder kapazitiv ausgeführt sind.

2. Einsatz (100) nach Anspruch 1, ferner umfassend einen Magneten zum Aufnehmen und Anhaften des Bedienelements (160) und/oder des Mobilgeräts (140) an dem Kontaktelement (120).

3. Einsatz (100) nach Anspruch 1 oder 2, ferner umfassend eine Schnittstelle, die eingerichtet ist, einen elektrischen Kontakt oder eine Funkverbindung zwischen einem externen Netzwerkbussystem und dem Kontaktelement (120) herzustellen.

4. Einsatz (100) nach einem der vorstehenden Ansprüche, ferner umfassend:
einen Funkempfänger, der eingerichtet ist, ein Signal von einem oder mehreren Bedienelementen (160) zu empfangen und dieses an ein Netzwerkbussystem zu senden; und/oder
einen Funksender, der eingerichtet ist, ein Signal von einem Netzwerkbussystem zu empfangen und dieses an ein oder mehrere Bedienelemente (160) weiterzuleiten.

5. Einsatz (100) nach einem der vorstehenden Ansprüche, wobei das Kontaktelement (120) eine Aussparung aufweist, in die das Bedienelement (160) eingesetzt werden kann.

6. Einsatz (100) nach einem der vorstehenden Ansprüche, ferner umfassend einen Bügel (400, 800), der aus dem Einsatz (100) ausgeklappt werden kann und in ausgeklappter Position das Bedienelement (160) oder das Mobilgerät (140) vor dem Herunterfallen sichert.

7. Einsatz (100) nach Anspruch 6, wobei der Bügel (400,800) in eingeklappter Position das Kontaktelement (120) an drei Seiten umschließt und bündig mit einer Stirnseite des Kontaktelements (120) abschließt.

8. Einsatz (100) nach Anspruch 6, wobei der Bügel (400,800) in das Kontaktelement eingelassen ist und bündig mit einer Stirnseite des Kontaktelements (120) abschließt.

9. Einsatz (100) nach einem der Ansprüche 6 bis 8, wobei der Bügel (400,800) eine Lasche (410,810) aufweist, an der er in die ausgeklappte Position gezogen werden kann.

10. Einsatz (100) nach einem der vorstehenden Ansprüche, ferner umfassend ein Sicherungsband (700), das abrollbar an einer Spule an dem Kontaktelement (120) befestigt ist, wobei das Sicherungsband (700) im abgerollten Zustand um das Bedienelement (160) oder das Mobilgerät (140) gezogen werden kann, um dieses an das Kontaktelement (120) zu drücken.

11. Einsatz (100) nach einem der vorstehenden Ansprüche, ferner umfassend eine in das Kontaktelement (120) eingelassene Lasche (180), die aus diesem herausgezogen werden kann und in herausgezogener Position starr von dem Kontaktelement (120) absteht und eingerichtet ist, ein Mobilgerät (140) oder Bedienelement (160) vor dem Herunterfallen zu sichern.

12. Einsatz (100) nach einem der vorstehenden Ansprüche, ferner umfassend einen Rahmen (300,500), der an dem Kontaktelement (120) befestigt und von diesem beabstandet ist, wobei zwischen Rahmen (300,500) und Kontaktelement (120) ein Mobilgerät (140) eingeschoben werden kann und wobei der Rahmen (300,500) eine Aussparung zum Einsetzen eines Bediengeräts (160) aufweist.

13. Einsatz (100) nach einem der vorstehenden Ansprüche, wobei das Mobilgerät (140) ein Mobiltelefon, ein Notebook, eine Fernbedienung oder ein Tablet ist.

## Claims

1. An insert (100) for stationary installation in a wall, comprising:
a base (110) adapted to be connected to a power supply in or on the wall;
a mobile operating element (160);
a contact element (120) placed on the base (110) and adapted to receive the mobile operating element (160) or a mobile device (140);
a charging station in the base (110) adapted to be connected to the power supply and to supply power to an accumulator in the mobile operating element (160) or mobile device (140) when a mobile operating element (160) or mobile device (140) is received by the contact element (120);
**characterized in that** the operating element (160) has one or more button elements, in particular wherein the button elements are designed mechanically or capacitively.

2. The insert (100) of claim 1, further comprising a magnet for receiving and adhering the control element (160) and/or the mobile device (140) to the contact element (120).

3. The insert (100) according to claim 1 or 2, further comprising an interface adapted to establish an electrical contact or a radio link between an external network bus system and the contact element (120).

4. The insert (100) according to any one of the preceding claims, further comprising:
a radio receiver adapted to receive a signal from one or more control elements (160) and transmit the signal to a network bus system; and/or
a radio transmitter arranged to receive a signal from a network bus system and to forward the signal to one or more control elements (160).

5. The insert (100) according to any one of the preceding claims, wherein the contact element (120) has a recess into which the operating element (160) can be inserted.

6. The insert (100) according to any one of the preceding claims, further comprising a bracket (400, 800) that can be unfolded from the insert (100) and, in the unfolded position, secures the control element (160) or the mobile device (140) from falling.

7. The insert (100) according to claim 6, wherein the bracket (400,800) in the folded position encloses the contact element (120) on three sides and terminates flush with an end face of the contact element (120).

8. The insert (100) according to claim 6, wherein the bracket (400,800) is recessed into the contact element and terminates flush with an end face of the contact element (120).

9. The insert (100) according to any one of claims 6 to 8, wherein the bracket (400,800) comprises a tab (410,810) by which it can be pulled into the deployed position.

10. The insert (100) according to any one of the preceding claims, further comprising a securing band (700) unrollably attached to a spool on the contact element (120), wherein the securing band (700) can be pulled around the operating element (160) or the mobile device (140) when unrolled to press it against the contact element (120).

11. The insert (100) according to any one of the preceding claims, further comprising a tab (180) embedded in the contact element (120), which can be pulled out of the contact element (120) and, in the pulled-out position, rigidly protrudes from the contact element (120) and is arranged to secure a mobile device (140) or operating element (160) from falling down.

12. The insert (100) according to any one of the preceding claims, further comprising a frame (300,500) attached to and spaced from the contact element (120), wherein a mobile device (140) can be inserted between the frame (300,500) and the contact element (120), and wherein the frame (300,500) comprises a recess for inserting an operating device (160).

13. The insert (100) according to any one of the preceding claims, wherein the mobile device (140) is a cell phone, a notebook, a remote control or a tablet.

## Revendications

1. Insert (100) destiné à être inséré de manière fixe dans un mur, comprenant :
un socle (110) qui est conçu pour être raccordé à une alimentation électrique dans ou sur le mur ;
un élément de commande mobile (160) ;
un élément de contact (120) posé sur le socle (110), qui est conçu pour loger l'élément de commande mobile (160) ou un appareil mobile (140) ;
une station de charge dans le socle (110), qui est conçue pour être reliée avec l'alimentation électrique et, lors du logement d'un élément de commande mobile (160) ou d'un appareil mobile (1140) par l'élément de contact (120), pour alimenter en courant un accumulateur dans l'élément de commande mobile (160) ou l'appareil mobile (140) ;
**caractérisé en ce que** l'élément de commande (160) comprend un ou plusieurs éléments de touches, plus particulièrement dans lequel les éléments de touches sont conçus de manière mécanique ou capacitive.

2. Insert (100) selon la revendication 1, comprenant en outre un aimant pour le logement et l'adhérence de l'élément de commande (160) et/ou de l'appareil mobile (140) à l'élément de contact (120).

3. Insert (100) selon la revendication 1 ou 2, comprenant en outre une interface qui est conçue pour établir un contact électrique ou une liaison radio entre un système de bus de réseau externe et l'élément de contact (120).

4. Insert (100) selon l'une des revendications précédentes, comprenant en outre :
un récepteur radio qui est conçu pour recevoir un signal en provenance d'un ou plusieurs éléments de commande (160) et envoyer celui-ci à un système de bus de réseau externe ; et/ou
un émetteur radio qui est conçu pour recevoir un signal en provenance d'un système de bus de réseau externe et pour transmettre celui-ci à un ou plusieurs éléments de commande (160).

5. Insert (100) selon l'une des revendications précédentes, dans lequel l'élément de contact (120) comprend un évidement dans lequel l'élément de commande (160) peut être inséré.

6. Insert (100) selon l'une des revendications précédentes, comprenant en outre un étrier (400, 800) qui peut être déplié hors de l'insert (100) et, dans la position dépliée, sécurise l'élément de commande (160) ou l'appareil mobile (140) contre une chute.

7. Insert (100) selon la revendication 6, dans lequel l'étrier (400, 800), dans la position repliée, entoure l'élément de contact (120) sur trois côtés et se termine en affleurement avec une face frontale de l'élément de contact (120).

8. Insert (100) selon la revendication 6, dans lequel l'étrier (400, 800) est encastré dans l'élément de contact et se termine en affleurement avec une face frontale de l'élément de contact (120).

9. Insert (100) selon l'une des revendications 6 à 8, dans lequel l'étrier (400, 800) comprend une patte (410, 810) avec laquelle il peut être tiré vers la position dépliée.

10. Insert (100) selon l'une des revendications précédentes, comprenant en outre une bande de sécurité (700) qui est fixée, de manière déroulable sur une bobine, à l'élément de contact (120), dans lequel la bande de sécurité (700), dans l'état déroulé, peut être tirée autour de l'élément de commande (160) ou de l'appareil mobile (140) afin de comprimer celui-ci contre l'élément de contact (120).

11. Insert (100) selon l'une des revendications précédentes, comprenant en outre une patte (180) encastrée dans l'élément de contact (120), qui peut être sortie et, dans la position sortie, s'éloigne de manière rigide de l'élément de contact (120) et qui est conçue pour sécuriser un appareil mobile (140) ou élément de commande (160) contre une chute.

12. Insert (100) selon l'une des revendications précédentes, comprenant en outre un cadre (300, 500) qui est fixé à l'élément de contact (120) et est distant de celui-ci, dans lequel, entre le cadre (300, 500) et l'élément de contact (120), peut être inséré un appareil mobile (140) et dans lequel le cadre (300, 500) comprend un évidement pour l'insertion d'un appareil de commande (160).

13. Insert (100) selon l'une des revendications précédentes, dans lequel l'appareil mobile (140) est un téléphone mobile, ordinateur portable, une télécommande ou une tablette.
